# EUROPEAN PATENT APPLICATION

(11) **EP 4 095 973 A1**
(43) Date of publication of application: **30.11.2022**
(21) Application number: 21926049.4
(22) Date of filing: 30.09.2021
(51) Int. Cl.: H01M 10/0587, H01M 10/0525

(54) **CYLINDRICAL LITHIUM ION BATTERY AND MANUFACTURING METHOD THEREFOR**

(30) Priority: 12.03.2021 CN 202120524746 U; 12.03.2021 CN 202110269090
(71) Applicant: Hengdian Group DMEGC Magnetics Co., Ltd., Jinhua, Zhejiang 322118 (CN)
(72) Inventor: ZHANG, Zhangming, Jinhua, Zhejiang 322118 (CN); ZHANG, Shenghui, Jinhua, Zhejiang 322118 (CN); HUANG, Ming, Jinhua, Zhejiang 322118 (CN); CHEN, Dejun, Jinhua, Zhejiang 322118 (CN); ZHANG, Bo, Jinhua, Zhejiang 322118 (CN)
(74) Representative: Cabinet Beaumont
(86) International application number: PCT/CN2021/122302
(87) International publication number: WO 2022/188400

(57) **Abstract**

Provided are a cylindrical lithium-ion battery and a manufacturing method thereof, which belong to the technical field of lithium-ion batteries. The cylindrical lithium-ion battery includes a positive pole piece (1), a positive lug (2), a negative pole piece (3), negative lugs (4), insulating sheets (5), and a diaphragm. Both front and back sides of a first positive current collector region (11), both front and back sides of a second positive current collector region (12), and both front and back sides of a third positive current collector region (13) are completely covered by the insulating sheets (5), and the positive lug (2) is disposed between one of the insulating sheets (5) and the third positive current collector region (13). Two sides or one side of a first negative current collector region (31) and a second negative current collector region (32) are covered by the insulating sheets (5), and the negative lugs (4) are disposed between one of the insulating sheets (5) and the first negative current collector region (31) and between one of the insulating sheets (5) and the second negative current collector region (32). An initial winding end of the positive pole piece (1) and an initial winding end of the negative pole piece (3) are disposed at different positions of the diaphragm along a winding direction.

## Description

This application claims priority to Chinese Patent Application No. 202110269090.4 filed with the China National Intellectual Property Administration (CNIPA) on Mar. 12, 2021, the disclosure of which is incorporated herein by reference in its entirety.

### TECHNICAL FIELD

The present application relates to the technical field of lithium-ion batteries, for example, a cylindrical lithium-ion battery and a manufacturing method thereof.

### BACKGROUND

With the development of intelligence, networking, and cordlessness of electrical equipment, lithium-ion batteries are more and more widely used in the field of small home appliances and smart devices. 18650 and 2170 cylindrical lithium-ion batteries are currently two relatively mature products, are easy to produce due to the uniform dimension, and are very suitable for large-scale batch applications.

The production of high-quality cylindrical lithium-ion batteries is inseparable from the strict control of a manufacturing process, but a certain percentage of abnormal products cannot be avoided in an actual production process. For example, when a cylindrical lithium-ion battery is wound on a pole piece, burrs exist after the pole piece is cut. Due to factors such as an extremely short service life of a cutter, the deviation of a cutter position, or the fluctuation of the cutter air pressure, dimensions of the burrs fluctuate, thereby easily causing excessive burrs, and it is difficult to perform full inspection during the production process. Therefore, it is difficult to avoid the burrs. The difference in the dimensions of the burrs exists. Batteries with large burrs exhibit a larger self-discharge rate during a self-discharge screening stage. It is difficult for the self-discharge screening to screen batteries with small burrs; after these batteries are put into use, as the number of battery cycles increases, due to the existence of hidden dangers caused by the burrs, the burrs will pierce a diaphragm at any time, leading to battery failure and accidents.

Therefore, there is an urgent need for a cylindrical lithium-ion battery and a manufacturing method thereof that reduce the risk of a short circuit between positive and negative electrodes, so as to solve the preceding technical problems in the related art.

### SUMMARY

The present application provides a cylindrical lithium-ion battery and a manufacturing method thereof that reduce the risk of a short circuit between positive and negative electrodes, reduce the risk of failure, and ensure the safe use of the battery.

The present application adopts technical solutions described below.

A cylindrical lithium-ion battery includes a positive pole piece, a positive lug, a negative pole piece, negative lugs, insulating sheets, and a diaphragm.

The positive pole piece includes a first positive current collector region, a second positive current collector region, and a third positive current collector region. The first positive current collector region (and the second positive current collector region are disposed at two ends of the positive pole piece, respectively, and the third positive current collector region is disposed in a middle of the positive pole piece.

The positive lug is disposed in the third positive current collector region.

The negative pole piece includes a first negative current collector region and a second negative current collector region that are disposed at two ends of the negative pole piece, respectively.

Negative lugs are disposed in both the first negative current collector region and the second negative current collector region, respectively.

Both front and back sides of the first positive current collector region, both front and back sides of the second positive current collector region, and both front and back sides of the third positive current collector region are completely covered by the insulating sheets, and the positive lug is disposed between one of the insulating sheets and the third positive current collector region; two sides or one side of the first negative current collector region and the second negative current collector region are covered by the insulating sheets, and the negative lugs are disposed between one of the insulating sheets and the first negative current collector region and between one of the insulating sheets and the second negative current collector region.

An initial winding end of the positive pole piece and an initial winding end of the negative pole piece are disposed at different positions of the diaphragm along a winding direction.

The present application further provides a manufacturing method of a cylindrical lithium-ion battery used for manufacturing the preceding cylindrical lithium-ion battery. The manufacturing method of a cylindrical lithium-ion battery includes steps described below.

Positive slurries are coated on a positive current collector so that a positive coating region is formed, and two foil-exposed regions are reserved in a middle of the positive current collector, where one of the two foil-exposed regions is a combination of a first positive current collector region and a second positive current collector region and the other one of the two foil-exposed regions is a third positive current collector region; and drying, rolling, and cutting are performed so that a pre-processed positive pole piece is obtained.

A positive lug is connected to the third positive current collector region, where a dimension of the positive lug along a winding direction is less than a dimension of the third positive current collector region along the winding direction; and both front and back sides of the third positive current collector region are completely covered by insulating sheets.

Both front and back sides of the combination of the first positive current collector region and the second positive current collector region are completely covered by the insulating sheets.

The combination of the first positive current collector region and the second positive current collector region are cut so that the first positive current collector region and the second positive current collector region are formed and the positive pole piece before wound is obtained.

Negative slurries are coated on a negative current collector so that a negative coating region and one foil-exposed region are formed, and then drying, rolling, and cutting are performed so that a pre-processed negative pole piece is obtained, where the one foil-exposed region is a combination of a first negative current collector region and a second negative current collector region.

Negative lugs are disposed in both the first negative current collector region and the second negative current collector region, and tops of the negative lugs are completely covered by the insulating sheets, where the one foil-exposed region not covered by the insulating sheets is disposed between one insulating sheet in the first negative current collector region and one insulating sheet in the second negative current collector region and configured to be cut.

Cutting is performed from the one foil-exposed region between the first negative current collector region and the second negative current collector region so that the first negative current collector region and the second negative current collector region are formed and the negative pole piece before wound is obtained.

The positive pole piece before wound and the negative pole piece before wound are wound, where an initial winding end of the positive pole piece and an initial winding end of the negative pole piece are disposed at different positions of a diaphragm along the winding direction; during winding, one insulating sheet at the initial winding end of the negative pole piece is disposed on an inner side of the winding, a head of one insulating sheet at the initial winding end of the positive pole piece falls on the insulating sheet at the initial winding end of the negative pole piece, a crossing distance is d, and a distance between a tail of the insulating sheet at the initial winding end of the positive pole piece and a tail of the insulating sheet at the initial winding end of the negative pole piece along the winding direction is c; and finally, a winding core is formed.

The winding core is put into a casing and liquid is injected so that the cylindrical lithium-ion battery is assembled.

The cylindrical lithium-ion battery is activated through a formation process.

### BRIEF DESCRIPTION OF DRAWINGS

FIG. 1 is a structural view of a positive pole piece, a positive lug, and an insulating sheet according to a specific embodiment of the present application;
FIG. 2 is a structural view of a negative pole piece, a negative lug, and an insulating sheet according to a specific embodiment of the present application; and
FIG. 3 is a structural view of a winding core according to a specific embodiment of the present application.

### Reference list

- 1: positive pole piece
- 11: first positive current collector region
- 12: second positive current collector region
- 13: third positive current collector region
- 2: positive lug
- 3: negative pole piece
- 31: first negative current collector region
- 32: second negative current collector region
- 4: negative lug
- 5: insulating sheet

### DETAILED DESCRIPTION

The technical solutions of the present application are described hereinafter in conjunction with drawings and embodiments.

In the description of the present application, terms "joined", "connected" and "secured" are to be understood in a broad sense unless otherwise expressly specified and limited. For example, the term "connected" may refer to "securely connected", "detachably connected" or "integrated", may refer to "mechanically connected" or "electrically connected" or may refer to "connected directly", "connected indirectly through an intermediary" or "connected inside two components" or "interaction relations between two components". For those of ordinary skill in the art, specific meanings of the preceding terms in the present application may be understood based on specific situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

In the description of the embodiments, it is to be noted that orientations or position relations indicated by terms such as "above", "below", "left" and "right" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting the present application. In addition, the terms "first" and "second" are used only to distinguish between descriptions and have no special meaning.

### Embodiment one

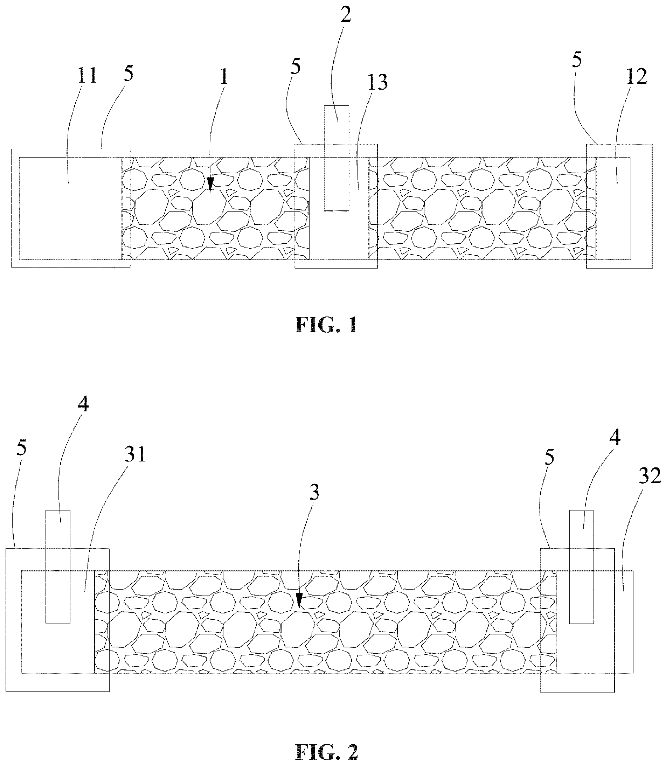

As shown in FIGS. 1 to 3, this embodiment provides a cylindrical lithium-ion battery. The cylindrical lithium-ion battery includes a positive pole piece 1, a positive lug 2, a negative pole piece 3, negative lugs 4, insulating sheets 5, and a diaphragm. The positive pole piece 1 includes a first positive current collector region 11 and a second positive current collector region 12 and a third positive current collector region 13. The first positive current collector region 11 and the second positive current collector region 12 are disposed at two ends of the positive pole piece 1, respectively, and the third positive current collector region 13 disposed in a middle of the positive pole piece 1. The positive lug 2 is disposed in the third positive current collector region 13. The negative pole piece 3 includes a first negative current collector region 31 and a second negative current collector region 32 that are disposed at two ends of the negative pole piece 3, respectively. The negative lugs 4 are disposed in the first negative current collector region 31 and the second negative current collector region 32, respectively. Both front and back sides of the first positive current collector region 11, both front and back sides of the second positive current collector region 12, and both front and back sides of the third positive current collector region 13 are completely covered by the insulating sheets 5, and the positive lug 2 is disposed between one insulating sheet 5 and the third positive current collector region 13. Two sides or one side of the first negative current collector region 31 and the second negative current collector region 32 are covered by the insulating sheets 5, and the negative lugs 4 are disposed between one insulating sheet 5 and the first negative current collector region 31 and between one insulating sheet 5 and the second negative current collector region 32. An initial winding end of the positive pole piece 1 and an initial winding end of the negative pole piece 3 are disposed at different positions of the diaphragm along a winding direction. Exemplarily, the diaphragm is pre-rolled to form a diaphragm roll in a middle of the cylindrical lithium-ion battery, and the initial winding end of the positive pole piece 1 and the initial winding end of the negative pole piece 3 are disposed at different positions of the diaphragm roll along the winding direction.

The method of covering the insulating sheets 5 is adopted so that even if burrs are cut and pierce the diaphragm, due to the isolation of the insulating sheets 5, contact between positive and negative electrodes is prevented, thereby avoiding a short circuit, reducing the risk of failure, and ensuring the safe use of the battery. The initial winding end of the positive pole piece 1 and the initial winding end of the negative pole piece 3 are wound from different positions of the diaphragm so that contact between ends of a positive current collector and a negative current collector at the initial winding ends can be avoided. The diaphragm at the initial winding end is generally wound into a cylindrical shape and has a relatively great thickness. Therefore, it can basically avoid a short circuit between the initial winding end of the positive pole piece 1 and the initial winding end of the negative pole piece 3 due to the burrs during a cycle and thus avoid failure.

It is to be noted that both the front and back sides of the first positive current collector region 11, the second positive current collector region 12, and the third positive current collector region 13 are completely covered by the insulating sheets 5, which means that a length and a width of the insulating sheet 5 covering the first positive current collector region 11 are both greater than a length and a width of the first positive current collector region 11; a length and a width of the insulating sheet 5 covering the second positive current collector region 12 are both greater than a length and a width of the second positive current collector region 12; and a length and a width of the insulating sheet 5 covering the third positive current collector region 13 are both greater than a length and a width of the third positive current collector region 13. Exemplarily, the negative lugs 4 are disposed between one insulating sheet 5 and the first negative current collector region 31 and between one insulating sheet 5 and the second negative current collector region 32, which means that lengths and widths of the insulating sheets 5 are both greater than a length and a width of the negative lug 4 in the first negative current collector region 31 and a length and a width of the negative lug 4 in the second negative current collector region 32 so that the negative lugs 4 in the first negative current collector region 31 and the second negative current collector region 32 can be completely covered.

Optionally, a dimension of the first positive current collector region 11 along the winding direction is 12 mm to 35 mm, a dimension of the second positive current collector region 12 along the winding direction is 1 mm to 11 mm, and a dimension of the third positive current collector region 13 along the winding direction is 8 mm to 15 mm.

In this embodiment, the positive lug 2 is an aluminum tape. Optionally, a width of the positive lug 2 is 0.1 mm to 0.15 mm, and a thickness of the positive lug 2 is 0.07 mm to 0.15 mm. Exemplarily, in this embodiment, the negative lug 4 connected to the first negative current collector region 31 has a width of 2 mm to 5 mm and a length of 10 mm to 60 mm; the negative lug 4 connected to the second negative current collector region 32 has a width of 2 mm to 6 mm and a length of 10 mm to 60 mm.

Optionally, the insulating sheets 5 are made of polyethylene terephthalate (PET) or polyimide (PI). The insulating sheets 5 made of PET or PI can withstand a relatively high temperature, thereby ensuring the safe use of the battery.

Optionally, a dimension of the first negative current collector region 31 along the winding direction is 3 mm to 11 mm. In this embodiment, a dimension of the insulating sheet 5 covering the first negative current collector region 31 along the winding direction is 4 mm to 20 mm.

Optionally, an overlap dimension of the insulating sheets 5 and a coating region of the positive pole piece 1 along the winding direction is 1 mm to 3 mm; and an overlap dimension of the insulating sheets 5 and a coating region of the negative pole piece 3 along the winding direction is 1 mm to 3 mm.

### Embodiment two

This embodiment provides a manufacturing method of a cylindrical lithium-ion battery. The manufacturing method of a cylindrical lithium-ion battery includes steps described below.

In step S1, as shown in FIG. 1, ternary positive slurries or lithium iron phosphate slurries are coated on a positive current collector so that a positive coating region is formed, and two foil-exposed regions are reserved in a middle of the positive current collector, where one of the two foil-exposed regions is a combination of a first positive current collector region 11 and a second positive current collector region 12 and the other one of the two foil-exposed regions is a third positive current collector region 13; and drying, rolling, and cutting are performed so that a pre-processed positive pole piece is obtained. A length of the combination of the first positive current collector region 11 and the second positive current collector region 12 is 15 mm to 46 mm, and a length of the third positive current collector region 13 is 8 mm to 15 mm.

Optionally, the length of the combination of the first positive current collector region 11 and the second positive current collector region 12 is 15 mm, and the length of the third positive current collector region 13 is 15 mm.

In step S2, a positive lug 2 with a thickness of 0.1 mm, a length of 60 mm, and a width of 3.75 mm is placed at a position where the third positive current collector region 13 is attached, and the positive lug 2 is welded to the third positive current collector region 13 with a riveting head by ultrasonic welding or resistance welding. A dimension of the positive lug 2 along a winding direction is less than a dimension of the third positive current collector region 13 along the winding direction, and a width and a length of an insulating sheet 5 are greater than a width and a length of the third positive current collector region 13; the insulating sheet 5 is made of PI; a back side of the third positive current collector region 13 where the positive lug 2 is welded also needs to be covered by the insulating sheet 5, that is, both the front and back sides of the third positive current collector region 13 are completely covered by the insulating sheets 5.

In step S3, both front and back sides of the combination of the first positive current collector region 11 and the second positive current collector region 12 are completely covered by the insulating sheets 5, and an overlap dimension of the insulating sheets 5 and the positive coating region along the winding direction is 1 mm to 3 mm; the insulating sheets 5 is made of PET or PI, and a length of the insulating sheet 5 along the winding direction is 17 mm.

Optionally, the insulating sheets 5 are made of PET.

In step S4, the combination of the first positive current collector region 11 and the second positive current collector region 12 is cut so that the first positive current collector region 11 and the second positive current collector region 12 are formed and the positive pole piece 1 before wound is obtained. A length of the first positive current collector region 11 along the winding direction is 12 mm to 35 mm, and a length of the second positive current collector region 12 along the winding direction is 1 mm to 11 mm.

Optionally, the length of the first positive current collector region 11 along the winding direction is 35 mm, and the length of the second positive current collector region 12 along the winding direction is 1 mm.

In step S5, as shown in FIG. 2, negative slurries are coated on a negative current collector so that a negative coating region and one foil-exposed region are formed, and then drying, rolling, and cutting are performed so that a pre-processed negative pole piece 3 is obtained. The one foil-exposed region is a combination of a first negative current collector region 31 and a second negative current collector region 32, where a length of the first negative current collector region 31 along the winding direction is 15 mm to 46 mm, and a length of the second negative current collector region 32 along the winding direction is 8 mm to 15 mm.

Optionally, the length of the first negative current collector region 31 along the winding direction is 15mm, and the length of the second negative current collector region 32 along the winding direction is 8mm.

In step S6, negative lugs 4 are disposed in both the first negative current collector region 31 and the second negative current collector region 32 and welded to the negative current collector regions with the riveting head, and tops of the negative lugs 4 are completely covered by the insulating sheets 5. The negative lug 4 has a width of 2 mm to 5 mm, a length of 10 mm to 60 mm, and a thickness of 0.75 mm to 1.5 mm. The insulating sheet 5 completely covers the negative lug 4. The one foil-exposed region not covered by the insulating sheets 5 is disposed between one insulating sheet 5 in the first negative current collector region 31 and one insulating sheet 5 in the second negative current collector region 32 and configured to be cut.

A length of the insulating sheet 5 in the first negative current collector region 31 along the winding direction is 19 mm, and a length of the insulating sheet 5 in the second negative current collector region 32 along the winding direction is 12 mm. The insulating sheets 5 are made of PET or PI. Optionally, the insulating sheets 5 are made of PI. The insulating sheet 5 covers only one side of a top of the negative lug 4 and does not cover another side of the top of the negative lug 4. Optionally, the negative lug 4 has a width of 5 mm, a length of 10 mm, and a thickness of 1.5 mm.

In step S7, cutting is performed from the one foil-exposed region between the first negative current collector region 31 and the second negative current collector region 32 so that the first negative current collector region 31 and the second negative current collector region 32 are formed and the negative pole piece 3 before wound is obtained.

Lengths of the first negative current collector region 31 and the second negative current collector region 32 along the winding direction are 15 mm and 8 mm, respectively.

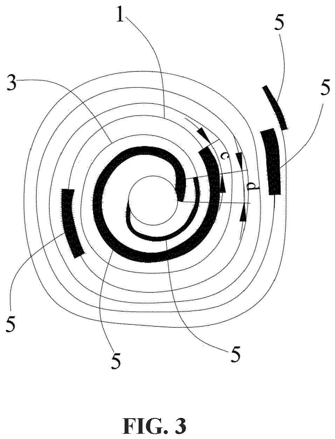

In step S8, as shown in FIG. 3, the positive pole piece 1 obtained in step S4 and the negative pole piece 3 obtained in step S7 are wound. An initial winding end of the positive pole piece 1 and an initial winding end of the negative pole piece 3 are disposed on two opposite sides of a cylindrical diaphragm along the winding direction, that is, no overlap point exists between the initial winding end of the positive pole piece 1 and the initial winding end of the negative pole piece 3. Even if the positive electrode has burrs, the burrs will not pierce the diaphragm, be in contact with the negative electrode, and short-circuit the negative electrode. During winding, one insulating sheet 5 at the initial winding end of the negative pole piece 3 is disposed on an inner side of the winding, a head of one insulating sheet 5 at the initial winding end of the positive pole piece 1 falls on the insulating sheet 5 at the initial winding end of the negative pole piece 3, a crossing distance is d, and a distance between a tail of the insulating sheet 5 at the initial winding end of the positive pole piece 1 and a tail of the insulating sheet 5 at the initial winding end of the negative pole piece 3 along the winding direction is c. Finally, a winding core with a certain diameter is formed. Since an inner side of the initial winding end of the negative pole piece 3 is further covered by the insulating sheet 5, and the crossing distance between the head of the insulating sheet 5 at the initial winding end of the positive pole piece 1 and the tail of the insulating sheet 5 at the initial winding end of the negative pole piece 3 is d, the positive current collector at the initial winding end of the positive pole piece 1 will not be in direct contact with the negative lug 4, thereby avoiding a short circuit. The distance between the tail of the insulating sheet 5 at the initial winding end of the positive pole piece 1 and the tail of the insulating sheet 5 at the initial winding end of the negative pole piece 3 is c so that burrs at a tail of the positive pole piece 1 is prevented from piercing the diaphragm and being in contact with the negative pole piece 3, thereby avoiding the short circuit, reducing the risk of failure, and ensuring the safe use of the battery. Exemplarily, a front side of the head of the insulating sheet 5 at the initial winding end of the positive pole piece 1 falls on the insulating sheet 5 at the initial winding end of the negative pole piece 3, the crossing distance is d, and a back side of the head of the insulating sheet 5 at the initial winding end of the positive pole piece 1 falls on the diaphragm, that is, the head of the insulating sheet 5 at the initial winding end of the positive pole piece 1 is divided into the front side and the back side, the front side of the head of the insulating sheet 5 at the initial winding end of the positive pole piece 1 is opposite to the insulating sheet 5 at the initial winding end of the negative pole piece 3, and the back side of the head of the insulating sheet 5 at the initial winding end of the positive pole piece 1 is opposite to a diaphragm roll.

The crossing distance d between the head of the insulating sheet 5 at the initial winding end of the positive pole piece 1 and the tail of the insulating sheet 5 at the initial winding end of the negative pole piece 3 is 1 mm to 10 mm; and the distance c between the tail of the insulating sheet 5 at the initial winding end of the positive pole piece 1 and the tail of the insulating sheet 5 at the initial winding end of the negative pole piece 3 along the winding direction is 1 mm to 5 mm. Optionally, in this embodiment, the distance c between the tail of the insulating sheet 5 at the initial winding end of the positive pole piece 1 and the tail of the insulating sheet 5 at the initial winding end of the negative pole piece 3 along the winding direction is 3 mm.

In step S9, the winding core is put into a casing and liquid is injected so that the cylindrical lithium-ion battery is assembled.

In step S10, the cylindrical lithium-ion battery is activated through a formation process.

The present application further provides a manufacturing method of a cylindrical lithium-ion battery. In step S8 in the manufacturing method of a cylindrical lithium-ion battery, during winding, the insulating sheet at the initial winding end of the negative pole piece is disposed on the inner side of the winding, and the crossing distance between the head of the insulating sheet at the initial winding end of the positive pole piece and the tail of the insulating sheet at the initial winding end of the negative pole piece is d so that even if burrs at the initial winding end of the positive pole piece pierce the cylindrical diaphragm, since the inner side of the initial winding end of the negative pole piece is further covered by the insulating sheet, the positive current collector at the initial winding end of the positive pole piece will not be in direct contact with the negative lug, thereby avoiding the short circuit. The distance between the tail of the insulating sheet at the initial winding end of the positive pole piece and the tail of the insulating sheet at the initial winding end of the negative pole piece along the winding direction is c so that the burrs at the tail of the positive pole piece can be prevented from piercing the diaphragm and being in contact with the negative pole piece, thereby avoiding the short circuit, reducing the risk of failure, and ensuring the safe use of the battery.

### Embodiment three

This embodiment further provides a manufacturing method of a cylindrical lithium-ion battery. The manufacturing method of a cylindrical lithium-ion battery includes steps described below.

In step S1, as shown in FIG. 1, ternary positive slurries or lithium iron phosphate slurries are coated on a positive current collector so that a positive coating region is formed, and two foil-exposed regions are reserved in a middle of the positive current collector, where one of the two foil-exposed regions is a combination of a first positive current collector region 11 and a second positive current collector region 12 and the other one of the two foil-exposed regions is a third positive current collector region 13; and drying, rolling, and cutting are performed so that a pre-processed positive pole piece 1 is obtained. A length of the combination of the first positive current collector region 11 and the second positive current collector region 12 is 46 mm, and a length of the third positive current collector region 13 is 8 mm.

In step S2, a positive lug 2 with a thickness of 0.15mm, a length of 60 mm, and a width of 3.75 mm is placed at a position where the third positive current collector region 13 is attached, and the positive lug 2 is welded to the third positive current collector region 13 with a riveting head by ultrasonic welding or resistance welding. A dimension of the positive lug 2 along a winding direction is less than a dimension of the third positive current collector region 13 along the winding direction, and a width and a length of an insulating sheet 5 are greater than a width and a length of the third positive current collector region 13; the insulating sheet 5 is made of PI; a back side of the third positive current collector region 13 where the positive lug 2 is welded also needs to be covered by the insulating sheet 5.

In step S3, both front and back sides of the combination of the first positive current collector region 11 and the second positive current collector region 12 are completely covered by the insulating sheets 5, and an overlap dimension of the insulating sheets 5 and the positive coating region along the winding direction is 1 mm to 3 mm; the insulating sheets 5 is made of PET or PI, and a length of the insulating sheet 5 along the winding direction is 48mm.

In this embodiment, optionally, the insulating sheets 5 are made of PET.

In step S4, the combination of the first positive current collector region 11 and the second positive current collector region 12 is cut so that the first positive current collector region 11 and the second positive current collector region 12 are formed and the positive pole piece 1 before wound is obtained. A length of the first positive current collector region 11 along the winding direction is 12 mm, and a length of the second positive current collector region 12 along the winding direction is 11 mm.

In step S5, as shown in FIG. 2, negative slurries are coated on a negative current collector so that a negative coating region and one foil-exposed region are formed, and then drying, rolling, and cutting are performed so that a pre-processed negative pole piece 3 is obtained. The one foil-exposed region is a combination of a first negative current collector region 31 and a second negative current collector region 32, where a length of the first negative current collector region 31 along the winding direction is 18mm, and a length of the second negative current collector region 32 along the winding direction is 12 mm.

In step S6, negative lugs 4 are disposed in both the first negative current collector region 31 and the second negative current collector region 32 and welded to the negative current collector regions with the riveting head, and tops of the negative lugs 4 are completely covered by the insulating sheets 5. The negative lug 4 has a width of 2 mm, a length of 60 mm, and a thickness of 0.75 mm. The insulating sheet 5 completely covers the negative lug 4. The one foil-exposed region not covered by the insulating sheets 5 is disposed between one insulating sheet 5 in the first negative current collector region 31 and one insulating sheet 5 in the second negative current collector region 32 and configured to be cut.

A length of the insulating sheet 5 in the first negative current collector region 31 along the winding direction is 22 mm, and a length of the insulating sheet 5 in the second negative current collector region 32 along the winding direction is 16 mm. The insulating sheets 5 are made of PET or PI. Optionally, the insulating sheets 5 are made of PI. The insulating sheet 5 covers only one side of a top of the negative lug 4 and does not cover another side of the top of the negative lug 4.

In step S7, cutting is performed from the one foil-exposed region between the first negative current collector region 31 and the second negative current collector region 32 so that the first negative current collector region 31 and the second negative current collector region 32 are formed and the negative pole piece 3 before wound is obtained.

Lengths of the first negative current collector region 31 and the second negative current collector region 32 along the winding direction are 18mm and 12mm, respectively.

In step S8, as shown in FIG. 3, the positive pole piece 1 obtained in step S4 and the negative pole piece 3 obtained in step S7 are wound. An initial winding end of the positive pole piece 1 and an initial winding end of the negative pole piece 3 are disposed on two opposite sides of a cylindrical diaphragm along the winding direction, that is, no overlap point exists between the initial winding end of the positive pole piece 1 and the initial winding end of the negative pole piece 3. Even if the positive electrode has burrs, the burrs will not pierce the diaphragm, be in contact with the negative electrode, and short-circuit the negative electrode. During winding, one insulating sheet 5 at the initial winding end of the negative pole piece 3 is disposed on an inner side of the winding, and finally, a winding core with a certain diameter is formed. Since an inner side of the initial winding end of the negative pole piece 3 is further covered by the insulating sheet 5, the positive current collector at the initial winding end of the positive pole piece 1 will not be in direct contact with the negative lug 4, thereby avoiding a short circuit, reducing the risk of failure, and ensuring the safe use of the battery.

A distance c between a tail of the insulating sheet 5 at the initial winding end of the positive pole piece 1 and a tail of the insulating sheet 5 at the initial winding end of the negative pole piece 3 along the winding direction is 1mm.

In step S9, the winding core is put into a casing and liquid is injected so that the cylindrical lithium-ion battery is assembled.

In step S10, the cylindrical lithium-ion battery is activated through a formation process.

### Embodiment four

This embodiment further provides a manufacturing method of a cylindrical lithium-ion battery. The manufacturing method of a cylindrical lithium-ion battery includes steps described below.

In step S1, as shown in FIG. 1, ternary positive slurries or lithium iron phosphate slurries are coated on a positive current collector so that a positive coating region is formed, and two foil-exposed regions are reserved in a middle of the positive current collector, where one of the two foil-exposed regions is a combination of a first positive current collector region 11 and a second positive current collector region 12 and the other one of the two foil-exposed regions is a third positive current collector region 13; and drying, rolling, and cutting are performed so that a pre-processed positive pole piece 1 is obtained. A length of the combination of the first positive current collector region 11 and the second positive current collector region 12 is 25 mm, and a length of the third positive current collector region 13 is 12 mm.

Optionally, the length of the combination of the first positive current collector region 11 and the second positive current collector region 12 is 15 mm, and the length of the third positive current collector region 13 is 15 mm.

In step S2, a positive lug 2 with a thickness of 0.1mm, a length of 60 mm, and a width of 3.75 mm is placed at a position where the third positive current collector region 13 is attached, and the positive lug 2 is welded to the third positive current collector region 13 with a riveting head by ultrasonic welding or resistance welding. A dimension of the positive lug 2 along a winding direction is less than a dimension of the third positive current collector region 13 along the winding direction, and a width and a length of an insulating sheet 5 are greater than a width and a length of the third positive current collector region 13; the insulating sheet 5 is made of PI; a back side of the third positive current collector region 13 where the positive lug 2 is welded also needs to be covered by the insulating sheet 5.

In step S3, both front and back sides of the combination of the first positive current collector region 11 and the second positive current collector region 12 are completely covered by the insulating sheets 5, and an overlap dimension of the insulating sheets 5 and the positive coating region along the winding direction is 1 mm to 3 mm; the insulating sheets 5 is made of PET or PI, and a length of the insulating sheet 5 along the winding direction is 35 mm.

Optionally, the insulating sheets 5 are made of PET.

In step S4, the combination of the first positive current collector region 11 and the second positive current collector region 12 is cut so that the first positive current collector region 11 and the second positive current collector region 12 are formed and the positive pole piece 1 before wound is obtained. A length of the first positive current collector region 11 along the winding direction is 25 mm, and a length of the second positive current collector region 12 along the winding direction is 6 mm.

In step S5, as shown in FIG. 2, negative slurries are coated on a negative current collector so that a negative coating region and one foil-exposed region are formed, and then drying, rolling, and cutting are performed so that a pre-processed negative pole piece 3 is obtained. The one foil-exposed region is a combination of a first negative current collector region 31 and a second negative current collector region 32, where a length of the first negative current collector region 31 along the winding direction is 20 mm, and a length of the second negative current collector region 32 along the winding direction is 15 mm.

In step S6, negative lugs 4 are disposed in both the first negative current collector region 31 and the second negative current collector region 32 and welded to the negative current collector regions with the riveting head, and tops of the negative lugs 4 are completely covered by the insulating sheets 5. The negative lug 4 has a width of 3.75 mm, a length of 45 mm, and a thickness of 1.25 mm. The insulating sheet 5 completely covers the negative lug 4. The one foil-exposed region not covered by the insulating sheets 5 is disposed between one insulating sheet 5 in the first negative current collector region 31 and one insulating sheet 5 in the second negative current collector region 32 and configured to be cut.

A length of the insulating sheet 5 in the first negative current collector region 31 along the winding direction is 24 mm, and a length of the insulating sheet 5 in the second negative current collector region 32 along the winding direction is 19 mm. The insulating sheets 5 are made of PET or PI. Optionally, the insulating sheets 5 are made of PI. The insulating sheet 5 covers only one side of a top of the negative lug 4 and does not cover another side of the top of the negative lug 4.

In step S7, cutting is performed from the one foil-exposed region between the first negative current collector region 31 and the second negative current collector region 32 so that the first negative current collector region 31 and the second negative current collector region 32 are formed and the negative pole piece 3 before wound is obtained.

Lengths of the first negative current collector region 31 and the second negative current collector region 32 along the winding direction are 20 mm and 15 mm, respectively.

In step S8, as shown in FIG. 3, the positive pole piece 1 obtained in step S4 and the negative pole piece 3 obtained in step S7 are wound. An initial winding end of the positive pole piece 1 and an initial winding end of the negative pole piece 3 are disposed on two opposite sides of a cylindrical diaphragm along the winding direction, that is, no overlap point exists between the initial winding end of the positive pole piece 1 and the initial winding end of the negative pole piece 3. Even if the positive electrode has burrs, the burrs will not pierce the diaphragm, be in contact with the negative electrode, and short-circuit the negative electrode. During winding, one insulating sheet 5 at the initial winding end of the negative pole piece 3 is disposed on an inner side of the winding, and finally, a winding core with a certain diameter is formed. Since an inner side of the initial winding end of the negative pole piece 3 is further covered by the insulating sheet 5, the positive current collector at the initial winding end of the positive pole piece 1 will not be in direct contact with the negative lug 4, thereby avoiding a short circuit, reducing the risk of failure, and ensuring the safe use of the battery.

A distance c between a tail of the insulating sheet 5 at the initial winding end of the positive pole piece 1 and a tail of the insulating sheet 5 at the initial winding end of the negative pole piece 3 along the winding direction is 5 mm.

In step S9, the winding core is put into a casing and liquid is injected so that the cylindrical lithium-ion battery is assembled.

In step S10, the cylindrical lithium-ion battery is activated through a formation process.

## Claims

1. A cylindrical lithium-ion battery, comprising:
a positive pole piece (1) comprising a first positive current collector region (11), a second positive current collector region (12), and a third positive current collector region (13), wherein the first positive current collector region (11) and the second positive current collector region (12) are disposed at two ends of the positive pole piece (1), respectively, and the third positive current collector region (13) is disposed in a middle of the positive pole piece (1);
a positive lug (2) disposed in the third positive current collector region (13);
a negative pole piece (3) comprising a first negative current collector region (31) and a second negative current collector region (32) that are disposed at two ends of the negative pole piece (3), respectively;
negative lugs (4) disposed in the first negative current collector region (31) and the second negative current collector region (32), respectively;
insulating sheets (5), wherein both front and back sides of the first positive current collector region (11), both front and back sides of the second positive current collector region (12), and both front and back sides of the third positive current collector region (13) are completely covered by the insulating sheets (5), and the positive lug (2) is disposed between one of the insulating sheets (5) and the third positive current collector region (13); two sides or one side of the first negative current collector region (31) and the second negative current collector region (32) are covered by the insulating sheets (5), and the negative lugs (4) are disposed between one of the insulating sheets (5) and the first negative current collector region (31) and between one of the insulating sheets (5) and the second negative current collector region (32); and
a diaphragm, wherein an initial winding end of the positive pole piece (1) and an initial winding end of the negative pole piece (3) are disposed at different positions of the diaphragm along a winding direction.

2. The cylindrical lithium-ion battery of claim 1, wherein a dimension of the first positive current collector region (11) along the winding direction is 12 mm to 35 mm, a dimension of the second positive current collector region (12) along the winding direction is 1 mm to 11 mm, and a dimension of the third positive current collector region (13) along the winding direction is 8 mm to 15 mm.

3. The cylindrical lithium-ion battery of claim 1, wherein the positive lug (2) is an aluminum tape.

4. The cylindrical lithium-ion battery of claim 1, wherein a width of the positive lug (2) is 0.1 mm to 0.15 mm, and a thickness of the positive lug (2) is 0.07 mm to 0.15 mm.

5. The cylindrical lithium-ion battery of claim 1, wherein the insulating sheets (5) are made of polyethylene terephthalate (PET) or polyimide (PI).

6. The cylindrical lithium-ion battery of claim 1, wherein a dimension of the first negative current collector region (31) along the winding direction is 3 mm to 11 mm.

7. The cylindrical lithium-ion battery of claim 6, wherein a dimension of one insulating sheet (5) covering the first negative current collector region (31) along the winding direction is 4 mm to 20 mm.

8. The cylindrical lithium-ion battery of claim 1, wherein an overlap dimension of the insulating sheets (5) and a coating region of the positive pole piece (1) along the winding direction is 1 mm to 3 mm; and an overlap dimension of the insulating sheets (5) and a coating region of the negative pole piece (3) along the winding direction is 1 mm to 3 mm.

9. A manufacturing method of a cylindrical lithium-ion battery used for manufacturing the cylindrical lithium-ion battery of any one of claims 1 to 8, comprising:
coating positive slurries on a positive current collector to form a positive coating region and reserving two foil-exposed regions in a middle of the positive current collector, wherein one of the two foil-exposed regions is a combination of a first positive current collector region (11) and a second positive current collector region (12) and another of the two foil-exposed regions is a third positive current collector region (13); and performing drying, rolling, and cutting to obtain a pre-processed positive pole piece;
connecting a positive lug (2) to the third positive current collector region (13), wherein a dimension of the positive lug (2) along a winding direction is less than a dimension of the third positive current collector region (13) along the winding direction; and completely covering both front and back sides of the third positive current collector region (13) with insulating sheets (5);
completely covering both front and back sides of the combination of the first positive current collector region (11) and the second positive current collector region (12) with the insulating sheets (5);
cutting the combination of the first positive current collector region (11) and the second positive current collector region (12) to form the first positive current collector region (11) and the second positive current collector region (12) and obtain the positive pole piece before wound;
coating negative slurries on a negative current collector to form a negative coating region and one foil-exposed region and then performing drying, rolling, and cutting to obtain a pre-processed negative pole piece, wherein the one foil-exposed region is a combination of a first negative current collector region (31) and a second negative current collector region (32);
disposing negative lugs (4) in both the first negative current collector region (31) and the second negative current collector region (32), and completely covering tops of the negative lugs (4) with the insulating sheets (5), wherein the one foil-exposed region not covered by the insulating sheets (5) is disposed between one insulating sheet (5) in the first negative current collector region (31) and one insulating sheet (5) in the second negative current collector region (32) and configured to be cut;
cutting from the one foil-exposed region between the first negative current collector region (31) and the second negative current collector region (32) to form the first negative current collector region (31) and the second negative current collector region (32) and obtain the negative pole piece before wound;
winding the positive pole piece before wound and the negative pole piece before wound, wherein an initial winding end of the positive pole piece (1) and an initial winding end of the negative pole piece (3) are disposed at different positions of a diaphragm along the winding direction; during winding, one insulating sheet (5) at the initial winding end of the negative pole piece (3) is disposed on an inner side of the winding, a head of one insulating sheet (5) at the initial winding end of the positive pole piece (1) falls on the insulating sheet (5) at the initial winding end of the negative pole piece (3), a crossing distance is d, and a distance between a tail of the insulating sheet (5) at the initial winding end of the positive pole piece (1) and a tail of the insulating sheet (5) at the initial winding end of the negative pole piece (3) along the winding direction is c; and finally forming a winding core;
putting the winding core into a casing and injecting liquid to assemble the cylindrical lithium-ion battery; and
activating the cylindrical lithium-ion battery through a formation process.

10. The manufacturing method of a cylindrical lithium-ion battery of claim 9, wherein the head of the insulating sheet (5) at the initial winding end of the positive pole piece (1) falls on the insulating sheet (5) at the initial winding end of the negative pole piece (3), and the crossing distance d is 1 mm to 10 mm; the distance c between the tail of the insulating sheet (5) at the initial winding end of the positive pole piece (1) and the tail of the insulating sheet (5) at the initial winding end of the negative pole piece (3) along the winding direction is 1 mm to 5 mm.
